# EUROPEAN PATENT APPLICATION

(11) **EP 4 538 751 A1**
(43) Date of publication of application: **16.04.2025**
(21) Application number: 24205594.5
(22) Date of filing: 09.10.2024
(51) Int. Cl.: G01V 1/40

(54) **AUTOMATIC SONIC DATA CLASSIFICATION AND UNCERTAINTY CONTROL USING VISUAL FEATURES**

(30) Priority: 09.10.2023 US 202363588761 P
(71) Applicant: Services Pétroliers Schlumberger, 75007 Paris (FR); Schlumberger Technology B.V., 2514 JG The Hague (NL)
(72) Inventor: KERETCHASHVILI, Gurami, 92140 Clamart (FR); LEI, Ting, Cambridge, 02139 (US); LIANG, Lin, Cambridge, 02139 (US)
(74) Representative: Schlumberger Intellectual Property Department

(57) **Abstract**

Embodiments presented provide for a classification of sonic data. In one aspect, visual features of sonic data are used to classify the sonic data and provide a quality control mechanism to ensure that a researcher understands the quality of the data calculations. In one or more embodiments, the method can obtain the raw sonic data from field measurements. The field measurements can pertain to downhole geological features.

## Description

### CROSS-REFERENCE TO RELATED APPLICATIONS

This application claims priority to and the benefit of U.S. Provisional Patent Application Serial No. 63/588,761, entitled "AUTOMATIC SONIC DATA CLASSIFICATION AND UNCERTAINTY CONTROL USING VISUAL FEATURES," filed October 9, 2023, which is hereby incorporated by reference in its entirety for all purposes.

### FIELD OF THE DISCLOSURE

Aspects of the disclosure relate to sonic tools and methods for evaluation of sonic signals from those sonic tools. More specifically, aspects of the disclosure relate to a method for classifying sonic data and controlling uncertainties within the data using an analysis of visual features.

### BACKGROUND

Borehole sonic measurements are used for formation evaluation, which can detect crucial geomechanical and geological features such as breakouts, fractures, stress effects, and intrinsic anisotropy effects. Identifying and classifying these kinds of features are important for geomechanical and petrophysical applications. Historically, classifying borehole sonic data is a manual process performed by a domain expert. This conventional process is time consuming and tedious. The process also requires domain expertise by a skilled individual.

More recently, sonic classification may be performed through the use of a machine learning program. While the use of machine learning programs help in such classifications, problems still exist with the existing processes. Even though the existing workflows produce high prediction accuracy, there are still challenges and drawbacks that need to be solved. For example, existing workflows require high-performance computation. Such high-performance computation is not always available for researchers; therefore, the use of slower capacity machines compromises overall efficiency.

In many instances, the data that needs classification is not error free. In sonic data, distortion and noise can be present, providing a significant challenge. Machine learning programs do not have the capability to separate noise from useful data, thereby limiting the effectiveness of the machine learning program.

In other instances, the noise may not allow for accurate classification. While the classification may be performed, errors from other sources may exist. Machine learning programs do not have significant quality checks for calculations performed.

Conventionally, sonic data classification can be performed using workflows which first take raw dispersion dots, on which a machine learning-enabled automatic sonic shear processing algorithm is applied, to find fast and slow dispersion curves. Then, extracted fast and slow dispersion curves are used to extract statistical features which later is used by a machine learning classifier. If initial raw data is of poor quality; however, it is complicated to extract good quality fast and slow dispersion curves. This might lead to poor quality prediction, and there is currently no method of quantification of quality of the prediction.

There is a need to provide an apparatus and methods that are easier to operate than conventional apparatus and methods for the process of classification of sonic data.

There is a further need to provide apparatus and methods that do not have the drawbacks discussed above, namely ease of calculation by a skilled individual and appropriate quality checks that do not exist with conventional apparatus.

There is a still further need to reduce economic costs associated with operations and apparatus described above with conventional tools and methods for sonic data classification.

### SUMMARY

So that the manner in which the above recited features of the present disclosure can be understood in detail, a more particular description of the disclosure, briefly summarized below, may be had by reference to embodiments, some of which are illustrated in the drawings. It is to be noted that the drawings illustrate only typical embodiments of this disclosure and are therefore not to be considered limiting of its scope, for the disclosure may admit to other equally effective embodiments without specific recitation. Accordingly, the following summary provides just a few aspects of the description and should not be used to limit the described embodiments to a single concept.

In one example embodiment, a method for sonic data classification is disclosed. The method may comprise obtaining raw sonic data related to a sonic analysis. The method may further comprise preparing a graph of data slowness versus frequency for the raw sonic data. The method may further comprise performing a statistical quality control evaluation of the raw sonic data within the graph wherein when the quality control evaluation indicates that the raw sonic data is not predictable, providing a warning notice to a user and ending the method. The method may further comprise creating a digital dispersion picture of the raw sonic data. The method may further comprise performing a feature extraction of the created digital dispersion picture. The method may further comprise creating an ensemble of the features extracted from the created digital picture. The method may further comprise at least one of creating a prediction for the geological stratum and creating a confidence score.

In another example embodiment, an object of manufacture containing a non-volatile memory is disclosed. The non-volatile memory may comprise a list of instructions that may be read and performed by a computing apparatus, the list of instructions provided in a method. The method may comprise obtaining raw sonic data related to a sonic analysis. The method performed may also comprise preparing a graph of data slowness versus frequency for the raw sonic data. The method performed may also further comprise performing a statistical quality control evaluation of the raw sonic data within the graph wherein when the quality control evaluation indicates that the raw sonic data is not predictable, providing a warning notice to a user and ending the method. The method performed may also further comprise creating a digital dispersion picture of the raw sonic data. The method performed may also further comprise performing a feature extraction of the created digital dispersion picture. The method performed may also further comprise creating an ensemble of the features extracted from the created digital picture. The method performed may also further comprise at least one of creating a prediction for the geological stratum and creating a confidence score.

In another example embodiment, a method for automatic sonic data classification using visual features is performed. The method may comprise obtaining raw sonic data related to a sonic analysis performed at a wellsite. The method may further comprise preparing a graph of data slowness versus frequency for the raw sonic data. The method may further comprise performing a statistical quality control evaluation of the raw sonic data within the graph wherein when the quality control evaluation indicates that the raw sonic data is not predictable, providing a warning notice to a user and ending the method. The method may further comprise creating a digital dispersion picture of the raw sonic data. The method may further comprise performing a feature extraction of the created digital dispersion picture. The method may further comprise creating an ensemble of the features extracted from the created digital picture. The method may further comprise creating a prediction for the geological stratum. The method may further comprise visually depicting the prediction on a computer monitor.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the drawings. It is to be noted; however, that the appended drawings illustrate only typical embodiments of this disclosure and are therefore not be considered limiting of its scope, for the disclosure may admit to other equally effective embodiments.
FIG. 1 is an automatic raw dots dispersion classification workflow.
FIG. 2 shows examples of three dispersion data sets where the dots are dispersion data. In view (a) dispersion data is unpredictable due to extremely low data quality, while in view (b) dispersion data is predictable and can be labeled as low frequency splitting with crossover but with a low confidence, while in view (c) data is predictable and can be labeled as low frequency splitting with crossover with high confidence (e.g., low uncertainty). The solid lines are reconstructed curves using a machine learning-enabled automatic sonic shear processing algorithm.
FIG. 3 is an example method of performing a method of classification of sonic data in one example embodiment of the disclosure.
FIG. 4 is an example computing apparatus that may perform the embodiments presented in FIG. 1 and FIG. 3.

To facilitate understanding, identical reference numerals have been used, where possible, to designate identical elements that are common to the figures ("FIGS"). It is contemplated that elements disclosed in one embodiment may be beneficially utilized on other embodiments without specific recitation.

### DETAILED DESCRIPTION

In the following, reference is made to embodiments of the disclosure. It should be understood; however, that the disclosure is not limited to specific described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments and advantages are merely illustrative and are not considered elements or limitations of the claims except where explicitly recited in a claim. Likewise, reference to "the disclosure" shall not be construed as a generalization of inventive subject matter disclosed herein and should not be considered to be an element or limitation of the claims except where explicitly recited in a claim.

Although the terms first, second, third, etc., may be used herein to describe various elements, components, regions, layers and/or sections, these elements, components, regions, layers and/or sections should not be limited by these terms. These terms may be only used to distinguish one element, components, region, layer or section from another region, layer or section. Terms such as "first", "second" and other numerical terms, when used herein, do not imply a sequence or order unless clearly indicated by the context. Thus, a first element, component, region, layer or section discussed herein could be termed a second element, component, region, layer or section without departing from the teachings of the example embodiments.

When an element or layer is referred to as being "on," "engaged to," "connected to," or "coupled to" another element or layer, it may be directly on, engaged, connected, coupled to the other element or layer, or interleaving elements or layers may be present. In contrast, when an element is referred to as being "directly on," "directly engaged to," "directly connected to," or "directly coupled to" another element or layer, there may be no interleaving elements or layers present. Other words used to describe the relationship between elements should be interpreted in a like fashion. As used herein, the term "and/or" includes any and all combinations of one or more of the associated listed terms.

Some embodiments will now be described with reference to the figures. Like elements in the various figures will be referenced with like numbers for consistency. In the following description, numerous details are set forth to provide an understanding of various embodiments and/or features. It will be understood, however, by those skilled in the art, that some embodiments may be practiced without many of these details, and that numerous variations or modifications from the described embodiments are possible. As used herein, the terms "above" and "below", "up" and "down", "upper" and "lower", "upwardly" and "downwardly", and other like terms indicating relative positions above or below a given point are used in this description to more clearly describe certain embodiments.

Aspects of methods described may be included onto a non-volatile memory system. For definitional purposes, a non-volatile memory system may be a memory system that does not wipe clean after termination of electrical power to the system. Examples of non-volatile memory systems may be compact disks, solid-state drives and universal serial bus devices. These memory systems may be used to store program executable method steps for a computer, server or computing arrangement.

In one example embodiment of the disclosure, an automated workflow of sonic classification is illustrated to address the drawbacks and complications with conventional analysis. Embodiments of the disclosure provide for classification of data in a way similar to human vision. Aspects of the disclosure take raw dispersion data and apply a sonic classification workflow, which includes statistical quality checking, dispersion data image creation, and feature extraction using a machine learning algorithm and classification module. Final output data is classified into four main categories. In addition to prediction, an aspect of the disclosure provides a confidence score which controls the quality of classification.

Aspects of the disclosure provide several new concepts compared to conventional analysis. First, the new method described is simple and fast to deploy. The method takes raw dispersion dots as inputs and makes a prediction in real time. Aspects of the disclosure do not require a dispersion processing method as a prerequisite, such as a physical driven machine-learning enabled automatic sonic shear processing algorithm, which reconstructs curves from raw dispersion dots. The aspects of the disclosure; therefore, can be deployed on or at a well-site without the need of high-performance computing. Second, aspects of the disclosure are more accurate than previous classification algorithms. The new algorithm takes dispersion data as an input and extracts visual features based on the training images and afterwards makes a prediction. Therefore, aspects of the disclosure herein can not only handle clean dispersion data but also can handle noisy dispersion data. Aspects of the disclosure provide an uncertainty estimate score that will allow researchers the ability to quantify the veracity of the calculations performed.

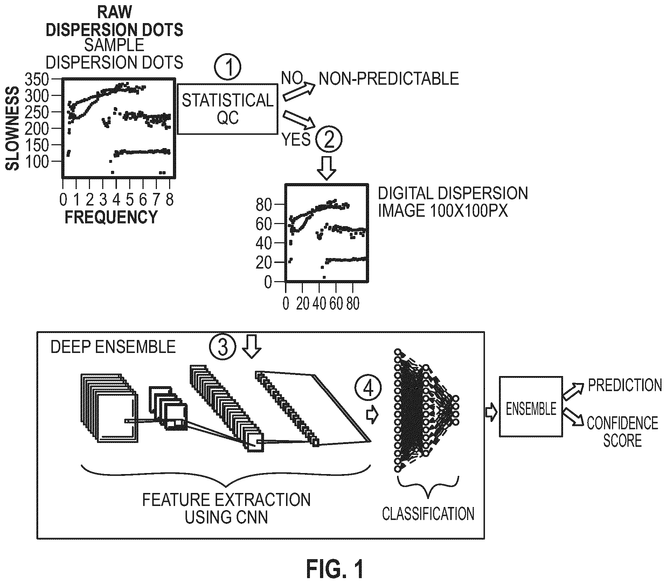

Referring to FIG. 1, one example embodiment of the disclosure is presented. As will be understood, a sonic analysis may be performed on a geological stratum. This sonic analysis may obtain reflections from various objects back to the reception apparatus, such as a transceiver. The transceiver may be actuated by the reflections and channel the reflected signals in the form of an output (such as a voltage output) to a computer apparatus. The computer apparatus may be configured to receive the raw data from the transceiver and record the data over time. As provided in FIG. 1, a graph of data slowness versus frequency may be generated. In such graphs, the data may have different slowness values for different frequencies created and received by the transceiver. Although disclosed as a transceiver, discrete transmitters and receivers may be used in other embodiments.

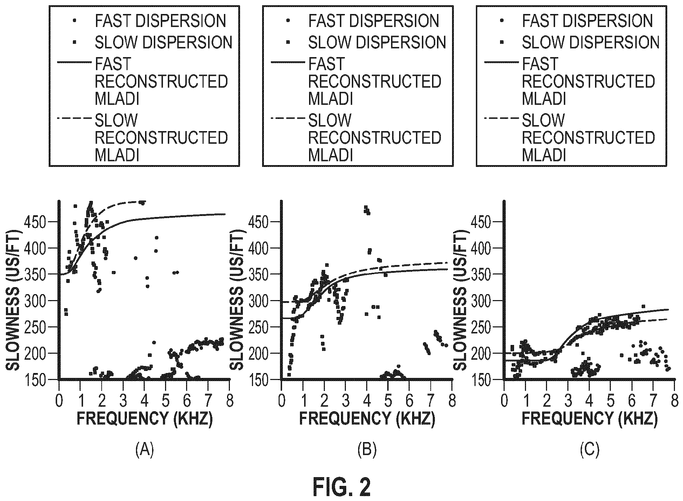

After receipt of the raw data from the downhole environment and recording of the data by a computer, a quality control function is used on the data obtained, as illustrated in FIG. 2. The quality control function may identify anomalous data based on a statistical analysis or expected statistical analysis. If the data obtained from the raw data indicates that the raw data does not fit expected parameters, the data may be identified as "non-predictable", and an error warning may be provided to the user. In such an event, the further method attempts may be aborted due to the inherent inability to fit the data into a predictable range.

The other possibility is that the quality control function described may be able to identify a predictable pattern. In embodiments where a predictable pattern is identified, then the method continues with creating a digital dispersion image. In the illustrated embodiment, a 100 pixel x 100 pixel image is created. As will be understood, dispersion may vary widely according to different types of geological media encountered. The creation of the pixel image is then analyzed using a convolutional neural network (CNN). As will be further understood, the convolution neural network may be previously trained on a known dataset allowing for the neural network to be properly balanced for classification activities. Datasets may be obtained from actual field generated data or may be synthetically generated data.

The CNN may obtain the data from the 100 x 100 pixel image and extract features from the image. The extracted features may then be classified according to a classification program. After all of the features have been extracted and classified, the data may be assembled and a prediction made. In addition to the above, an algorithm may generate a confidence score to allow a user to identify the degree of confidence in the calculations performed. The confidence score may be generated based upon numerous runs of the CNN system on datasets, allowing for generation of the score.

As disclosed above, the workflow takes raw dispersion data as input on which statistical quality checking is applied. The statistical quality check module detects if the raw dispersion data can be classified or not (e.g., predictable versus unpredictable). An example is provided in FIG. 2. FIG. 2 Illustrates three cases of dispersion data where FIG. 2(a) is unpredictable due to extremely low data quality, FIG. 2(b) is predictable and can be labeled as low frequency splitting with crossover but with a low confidence (e.g., a high uncertainty), whereas FIG. 2(c) is predictable and can be labeled as low frequency splitting with crossover with high confidence (e.g., low uncertainty). The solid lines are reconstructed curves. The challenges that existing sonic classification workflows face is that if dispersion data quality is not clean, the reconstruction quality will not be accurate and will affect the classification results.

Referring to FIG. 2, examples of three dispersion data sets where the dots shown are dispersion data. In view (a), dispersion data is unpredictable due to extremely low data quality, where in view (b), dispersion data is predictable and can be labeled as low frequency splitting with crossover but with a low confidence, and in view (c), data is predictable and can be labeled as low frequency splitting with crossover with high confidence (e.g., low uncertainty).

In one example embodiment, a deep ensemble method is used to evaluate a quality of the prediction. The method combines different determinalistic model predictions at inference. Different random initialization of neural network weights may be used. In some embodiments, a data shuffle may be used which introduces variety in the behavior among the single networks. This approach not only quantifies uncertainty and provides confidence scores, but also increases the prediction accuracy.

The method described above has been used on real field borehole sonic data. The result shows the following: 1) the method increases prediction accuracy by 5%; 2) the method successfully classifies raw noisy dispersion data which was previously impossible, 3) the method performs quality control of the prediction by providing a confidence score, and 4) the classification workflow is simpler and easily deployable compared to conventional analysis.

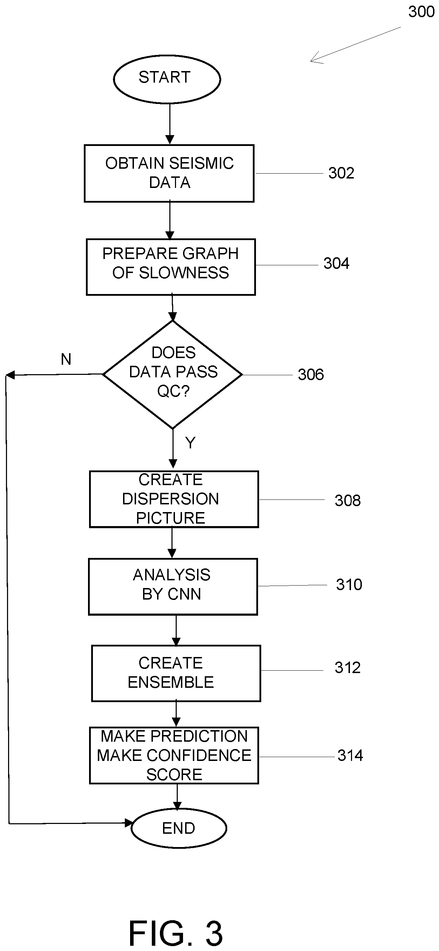

Referring to FIG. 3, an example method **300** of automatic sonic data classification and uncertainty control using visual features is illustrated. The method, at **302,** obtains raw data related to sonic analysis performed. As will be understood, the raw data may be obtained during direct analysis of geological structures at a remote field location. At **304,** the method continues with preparing a graph of data slowness versus frequency for the data obtained. At **306,** the method continues with performing a statistical quality control evaluation of the data within the graph produced at **304.** If the tests performed by the statistical quality control evaluation indicate that the data is not predictable, then the method may end. If the tests performed at **306** indicate that the statistical quality control evaluation is successful, a digital dispersion picture may be created at **308.** In one example embodiment, the picture may be 100 pixels by 100 pixels. Other potential pictures may be generated. At **310,** the method continues wherein a convolutional neural network analyzes the data of the digital dispersion picture generated at **310** to extract features. The method continues with taking the extracted features and creating an ensemble **312** of the extracted features. Based upon the ensemble **312** created, at least one of following is performed: creating a prediction for the geological stratum and creating a confidence score for the analysis performed at **314.** The method may then end.

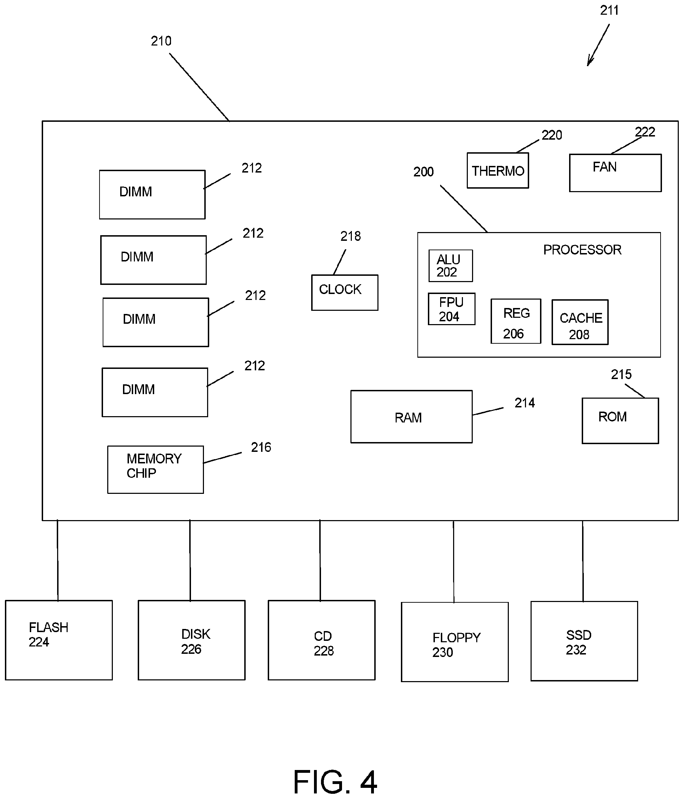

In such embodiments, referring to FIG. 4, a computing apparatus used in the method of FIG. 3, is illustrated. In FIG. 4, a processor **200** is provided to perform computational analysis for instructions provided. The instruction provided, code, may be written to achieve the desired goal and the processor may access the instructions. In other embodiments, the instructions may be provided directly to the processor **200.**

In other embodiments, other components may be substituted for generalized processors. These specifically designed components, known as application specific integrated circuits ("ASICs") are specially designed to perform the desired task. As such, the ASIC's generally have a smaller footprint than generalized computer processors. The ASIC's, when used in embodiments of the disclosure, may use field programmable gate array technology, that allow a user to make variations in computing, as necessary. Thus, the methods described herein are not specifically held to a precise embodiment, rather alterations of the programming may be achieved through these configurations.

In embodiments, when equipped with a processor **200,** the processor may have arithmetic logic unit ("ALU") **202,** a floating point unit ("FPU") **204,** registers **206** and a single or multiple layer cache 208. The arithmetic logic unit **202** may perform arithmetic functions as well as logic functions. The floating point unit **204** may be math coprocessor or numeric coprocessor to manipulate numbers more efficiently and quickly than other types of circuits. The registers **206** are configured to store data that will be used by the processor during calculations and supply operands to the arithmetic unit and store the result of operations. The single or multiple layer caches **208** are provided as a storehouse for data to help in calculation speed by preventing the processor **200** from continually accessing random access memory ("RAM").

Aspects of the disclosure provide for the use of a single processor **200.** Other embodiments of the disclosure allow for the use of more than a single processor. Such configurations may be called a multi-core processor, where different functions are conducted by different processors to aid in calculation speed. In embodiments, when different processors are used, calculations may be performed simultaneously by different processors, a process known as parallel processing.

The processor **200** may be located on a motherboard **210.** The motherboard **210** is a printed circuit board that incorporates the processor **200** as well as other components helpful in processing, such as memory modules ("DIMMS") **212,** random access memory **214,** read only memory, non-volatile memory chips **216,** a clock generator **218** that keeps components in synchronization, as well as connectors for connecting other components to the motherboard **210.** The motherboard **210** may have different sizes according to the needs of the computer architect. To this end, the different sizes, known as form factors, may vary from sizes from a cellular telephone size to a desktop personal computer size. The motherboard **210** may also provide other services to aid in functioning of the processor, such as cooling capacity. Cooling capacity may include a thermometer **220** and a temperature-controlled fan **222** that conveys cooling air over the motherboard **210** to reduce temperature.

Data stored for execution by the processor **200** may be stored in several locations, including the random-access memory **214,** read only memory, flash memory **224,** computer hard disk drives **226,** compact disks **228,** floppy disks **230** and solid state drives **232.** For booting purposes, data may be stored in an integrated chip called an EEPROM, that is accessed during start-up of the processor. The data, known as a Basic Input/Output System ("BIOS"), contains, in some example embodiments, an operating system that controls both internal and peripheral components.

Different components may be added to the motherboard or may be connected to the motherboard to enhance processing. Examples of such connections of peripheral components may be video input/output sockets, storage configurations (such as hard disks, solid state disks, or access to cloud-based storage), printer communication ports, enhanced video processors, additional random-access memory, and network cards.

The processor and motherboard may be provided in a discrete form factor, such as personal computer, cellular telephone, tablet, personal digital assistant or other component. The processor and motherboard may be connected to other such similar computing arrangement in networked form. Data may be exchanged between different sections of the network to enhance desired outputs. The network may be a public computing network or may be a secured network where only authorized users or devices may be allowed access.

As will be understood, method steps for completion may be stored in the random access memory, read only memory, flash memory, computer hard disk drives, compact disks, floppy disks, and solid state drives.

Different input/output devices may be used in conjunction with the motherboard and processor. Input of data may be through a keyboard, voice, Universal Serial Bus ("USB") device, mouse, pen, stylus, Firewire, video camera, light pen, joystick, trackball, scanner, bar code reader, and touch screen. Output devices may include monitors, printers, headphones, plotters, televisions, speakers, and projectors.

Example embodiments of the disclosure will be described. It should be understood that the embodiments shown should not be considered to limit the scope of the disclosure. In one example embodiment, a method for sonic data classification is disclosed. The method may comprise obtaining raw sonic data related to a sonic analysis. The method may further comprise preparing a graph of data slowness versus frequency for the raw sonic data. The method may further comprise performing a statistical quality control evaluation of the raw sonic data within the graph wherein when the quality control evaluation indicates that the raw sonic data is not predictable, providing a warning notice to a user and ending the method. The method may further comprise creating a digital dispersion picture of the raw sonic data. The method may further comprise performing a feature extraction of the created digital dispersion picture. The method may further comprise creating an ensemble of the features extracted from the created digital picture. The method may further comprise at least one of creating a prediction for the geological stratum and creating a confidence score.

In another example embodiment, the method may be performed wherein the raw sonic data is obtained from field measurements.

In another example embodiment, the method may be performed wherein the field measurements pertain to downhole geological features.

In another example embodiment, the method may be performed wherein the digital dispersion picture is 100 pixels by 100 pixels resolution.

In another example embodiment, the method may be performed wherein the feature extraction is performed by a neural network.

In another example embodiment, the method may be performed wherein the neural network is a convolutional neural network.

In another example embodiment, the method may further comprise storing the prediction for the geological stratum in a non-volatile memory.

In another example embodiment, the method may further comprise displaying at least one of the prediction for the geological stratum and the confidence score.

In another example embodiment, an object of manufacture containing a non-volatile memory is disclosed. The non-volatile memory may comprise a list of instructions that may be read and performed by a computing apparatus, the list of instructions provided in a method. The method may comprise obtaining raw sonic data related to a sonic analysis. The method performed may also comprise preparing a graph of data slowness versus frequency for the raw sonic data. The method performed may also further comprise performing a statistical quality control evaluation of the raw sonic data within the graph wherein when the quality control evaluation indicates that the raw sonic data is not predictable, providing a warning notice to a user and ending the method. The method performed may also further comprise creating a digital dispersion picture of the raw sonic data. The method performed may also further comprise performing a feature extraction of the created digital dispersion picture. The method performed may also further comprise creating an ensemble of the features extracted from the created digital picture. The method performed may also further comprise at least one of creating a prediction for the geological stratum and creating a confidence score.

In another example embodiment, the object of manufacture may be configured wherein the object is one of a solid-state memory device, a universal serial bus device and a computer hard disk.

In another example embodiment, a method for automatic sonic data classification using visual features is performed. The method may comprise obtaining raw sonic data related to a sonic analysis performed at a wellsite. The method may further comprise preparing a graph of data slowness versus frequency for the raw sonic data. The method may further comprise performing a statistical quality control evaluation of the raw sonic data within the graph wherein when the quality control evaluation indicates that the raw sonic data is not predictable, providing a warning notice to a user and ending the method. The method may further comprise creating a digital dispersion picture of the raw sonic data. The method may further comprise performing a feature extraction of the created digital dispersion picture. The method may further comprise creating an ensemble of the features extracted from the created digital picture. The method may further comprise creating a prediction for the geological stratum. The method may further comprise visually depicting the prediction on a computer monitor.

In another example embodiment, the method may further comprise creating a confidence score and displaying the confidence score.

In another example embodiment, the method may be performed wherein the feature extraction is performed by a neural network.

In another example embodiment, the method may be performed wherein the neural network is a convolutional neural network.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may be varied in many ways. Such variations are not to be regarded as a departure from the disclosure, and all such modifications are intended to be included within the scope of the disclosure.

While embodiments have been described herein, those skilled in the art, having benefit of this disclosure, will appreciate that other embodiments are envisioned that do not depart from the inventive scope. Accordingly, the scope of the present claims or any subsequent claims shall not be unduly limited by the description of the embodiments described herein.

## Claims

1. A method for sonic data classification, comprising:
obtaining raw sonic data related to a sonic analysis;
preparing a graph of data slowness versus frequency for the raw sonic data;
performing a statistical quality control evaluation of the raw sonic data within the graph wherein when the quality control evaluation indicates that the raw sonic data is not predictable, providing a warning notice to a user and ending the method;
creating a digital dispersion picture of the raw sonic data;
performing a feature extraction of the created digital dispersion picture;
creating an ensemble of the features extracted from the created digital picture; and
at least one of creating a prediction for the geological stratum and creating a confidence score.

2. The method according to claim 1, wherein the raw sonic data is obtained from field measurements.

3. The method according to claim 2, wherein the field measurements pertain to downhole geological features.

4. The method according to any one of the preceding claims, wherein the digital dispersion picture is 100 pixels by 100 pixels resolution.

5. The method according to any one of the preceding claims, wherein the feature extraction is performed by a neural network, and wherein the neural network is a convolutional neural network.

6. The method according to any one of the preceding claims, further comprising storing the prediction for the geological stratum in a non-volatile memory, displaying at least one of the prediction for the geological stratum and the confidence score, or both.

7. The method according to any one of the preceding claims, wherein the method is for automatic sonic data classification using visual features, comprising:
obtaining raw sonic data related to a sonic analysis performed at a wellsite;
preparing a graph of data slowness versus frequency for the raw sonic data;
performing a statistical quality control evaluation of the raw sonic data within the graph wherein when the quality control evaluation indicates that the raw sonic data is not predictable, providing a warning notice to a user and ending the method;
creating a digital dispersion picture of the raw sonic data;
performing a feature extraction of the created digital dispersion picture;
creating an ensemble of the features extracted from the created digital picture;
creating a prediction for the geological stratum; and
visually depicting the prediction on a computer monitor.

8. An object of manufacture containing a non-volatile memory, the non-volatile memory comprising a list of instructions that may be read and performed by a computing apparatus, the list of instructions provided in a method according to any one of the preceding claims.
